# EUROPEAN PATENT SPECIFICATION

(11) **EP 0 619 349 B1**
(45) Date of publication and mention of the grant of the patent: **24.07.1996**
(21) Application number: 94102649.4
(22) Date of filing: 22.02.1994
(51) Int. Cl.: C09D 11/00, B41J 2/175

(54) **Water-soluble ink and ink jet printer recording head**
Wasserlösliche Tinte und Schreibkopf für ein Tintenstrahlaufzeichnungsgerät
Encre soluble dans l'eau et une tête d'enregistrement pour une imprimante par jet d'encre

(30) Priority: 09.03.1993 JP 48227/93
(43) Date of publication of application: 12.10.1994
(73) Proprietor: SEIKO EPSON CORPORATION, Shinjuku-ku Tokyo 163 (JP)
(72) Inventor: Yamamoto, Chiyoshige, c/o Seiko Epson Corporation, Suwa-shi, Nagano-ken (JP); Kubomura, Youichi, c/o Seiko Epson Corporation, Suwa-shi, Nagano-ken (JP); Sugimura, Shigeo, c/o Seiko Epson Corporation, Suwa-shi, Nagano-ken (JP)
(74) Representative: Hoffmann, Eckart, Dipl.-Ing.

(56) References cited:
- EP-A- 0 453 578
- DATABASE WPI Week 9133, Derwent Publications Ltd., London, GB; AN 91-242341 & JP-A-3 157 464 (DAINICHISEIKA COLOR CHEM.) 5 July 1991
- DATABASE WPI Week 9302, Derwent Publications Ltd., London, GB; AN 93-012687 & JP-A-4 339 664 (SEIKO EPSON) 26 November 1992

## Description

The present invention relates to a recording head for a drop-on-demand type ink jet printer to be used primarily with electric calculators, cash registers, ATM's, facsimiles machines and similar devices. The invention further relates to an ink composition suitable for use in such a recording head.

An ink jet printer of the above mentioned kind is desired to have the following characteristics:
(1) The printer is free from dot-dropouts (missing dots on the print medium) and meandering of the flying ink drops expelled from the nozzle(s) of the print head.
(2) After having reached the recording medium, the ink is immediately dried.
(3) The electric power consumption of the printer as well as its size are small.
(4) The commercial unit price of the printer is low.

Several attempts have been made in the prior art in order to satisfy the above-mentioned requirements.

For example, regarding characteristic (1), the technique of wetting the ink flow pathway from an ink reservoir to the nozzle surface of the ink-jet recording head was said to be an important factor, in order to attain uniform wetting of the nozzle surface of the recording head with an ink and preventing generation of bubbles in the ink. For instance, as disclosed in JP-A-1-123752, grooves are formed so that the distances between a center line of an array of nozzles and the respective edges are the same and the edges of the nozzles are made of Ni, Ti, SiO₂, TiO₂ or the like or are surface-treated by plating, vapor deposition, sputtering or the like coating means.

As for (2), JP-A-1-111749 provides a heater-combined hot air-blowing unit so as to promote the drying of the printed ink by hot air.

JP-A-1-252680 (corresponding to EP-A-0 320 223) discloses addition of more than 40 wt.% of a wetting agent and a nonionic acetylene diol surfactant or dioctyl sulfosuccinate surfactant to the ink for preventing the ink from becoming clogged and for smooth operation of printing on plain papers (but not on bad papers).

Further, JP-B-58-6752 discloses addition of a tertiary alcohol-ethylene oxide adduct having the chemical formula [4] (for formula [4] and the other formulae mentioned hereinafter, see the list of formulae at the end of this description) to an ink so as to elevate the storage stability of the ink and to improve the smooth operation of printing with the ink on plain papers and the water-proofness of the printed images.

However, the above-mentioned prior art has the following drawbacks:
(1) The technique of JP-A-1-123752 requires an additional manufacturing step to form the recording head, thereby increasing the unit price of the products. In addition, with the above-mentioned coating means, completely uniform coating of the nozzle surface of the head is difficult so that the surface of the nozzle edges tend to have parts which are easily wettable and others which are not. As a result, the jetting direction of ink drops is uncertain to some extent (a defect called meandering) and printed letters may often not be clearly legible because of the deformation of the printed characters.
(2) The technique of JP-A-62-111749 needs the hot air blowing unit so that the printer is large-scaled, the electric power consumption is large and the production cost *is* high.
(3) Where the technique of JP-A-1-252680 or that of JP-B-58-6752 are employed, the time for drying the printed ink can be shortened to some degree and printing on plain papers is be possible without enlarging the scale of the printer, and additionally clogging of the ink jet head can be prevented and the storage stability and the water-proofness of the ink being used can be improved. However, in order to prevent ink drops from meandering and to eliminate dot-dropouts, both techniques still need to be combined with the technique of JP-A-1-123752, and, therefore, involve the above-mentioned problem.
(4) So far, an ink-jet head made of plastics has been proposed. However, plastics generally have no or poor wettability for water and, therefore, can hardly be wetted by water or by an ink including a water-soluble dye. Since the ink pathway in the plastic head is hardly wetted with the ink, bubbles tend to be generated in it. The bubbles reduce the effective force from pressure elements of the ink jet head because displacement of the pressure elements is absorbed by the bubbles so that the power of ink ejection is reduced. This in turn may cause dot-dropouts or a smaller dot size. In addition, it is difficult to wet the circumference of the orifices of the nozzles so that the same problems of meandering and deformation of the printed characters as in the above item (1) occur. The document EP-A-0453 578 discloses use of an ink jet printer having at least a portion of its ink supply system made from a plastic material, together with an ink composition having a contact angle of from 10° to 60° to the plastic material. The ink composition comprises 0.5 to 10 wt.% coloring agents, 1 to 25 wt.% wetting agents for preventing nozzle clogging, 0.1 to 5 wt.% additives for adjusting wettability and contact angles and 75 to 95 wt.% water as solvent. The additives may be or may include from 0.01 to 10 wt.% surfactants like pottassium oleate, sodium laurate and sodium dioctylsulfosuccinate.
(5) Next, since surfactants generally roughen the surface of plastic materials, selection of suitable plastics in planning printers for use with a surfactant-containing ink has heretofore been troublesome. The document JP-A-43 157464 discloses an ink jetting ink composition including an acetylene glycol surfactant.
(6) Further, development of means for individually satisfying the necessary characteristics of conventional inks and ink jet printers has heretofore been effected, but the means for totally satisfying all or most of the necessary characteristics has not been found as yet.

Under this situation, the present invention has been made so as to solve the drawbacks of the prior art , and its object is to provide a recording head for an ink jet printer and a water-soluble ink suitable for it, to satisfy all the above-mentioned necessary requirements (1) to (4). Specifically, the object of the present invention is to provide a recording head for a small-sized, inexpensive ink jet printer which has a small-sized plastic head, is free from dot-dropouts and meandering of flying ink drops, has a fast ink-jetting response (ink drops are quickly ejected in response to a driveing signal to the print head) and ink-jetting stability (the stability of the velocity of the ink drops, the amount of ink per ink drop etc.) and gives high-density print images.

The object of the present invention is also to provide a water-soluble ink which hardly bubbles and may well be de-foamed with high producibility in the de-foaming step, has high storage stability for a long period of time, and has an extremely short ink drying time without requiring electric power to be consumed to assist drying. In addition, the object of the present invention is also to provide a water-soluble ink used in an ink jet printer which has an ink jet head made of plastics, capable of giving printed images having good water-proofness and light fastness.

These objects are achieved with an ink as claimed in claim 1 and a recording head as claimed in claim 9, respectively. Preferred embodiments of the invention are subject-matter of the dependent claims.

The present invention as claimed provides the following effects and advantages:
(1) The base plates constituting the recording head are made of a plastic material by a short and simple process of shaping by molding or laser machining or the like.
(2) By adding a water-soluble dye having the structural formula [1] as a colorant to a water-soluble ink, the water-soluble ink may stably wet the ink flow pathway formed of the above-mentioned plastic base plates and also around the nozzle orifices at the edge of the base plates due to the adsorbing action of the dye to the plastics.
(3) The above-mentioned surfactants have hydrophilic OH groups in the center of the molecule and the hydrophobic group of the chemical formula [5] is branched in the molecule. Therefore, the penetrating force of the surfactants is large (for example, refer to the completely revised edition of New Introduction of Surfactants, by Takehiko Fujimoto, published by Sanyoukaseikogyo October 1, 1981), and the ink containing the surfactant(s) may rapidly penetrate into a paper just after it has been brought into contact with the paper. Thus, the ink is a quick drying one. The ink exhibits this property not only on a so-called coated paper but also on any plain paper or poor-quality paper.
(4) In addition, since the ink well penetrates into a paper, the water-soluble dye in the ink dyes the fibers of the paper. Therefore, even when the surface of the printed paper gets into contact with water or the like, the ink does not flow and the printed image may well be read correctly. Even when the printed image is exposed to the light, the density of the image is not lowered. Thus, both the water-proofness and the light fastness of the printed image are high.

Next, the present invention will be explained in detail on the basis of examples and with reference to the drawings, in which:
- Fig. 1: is a partly cut perspective view of a recording head illustrating one example of the present invention;
- Fig. 2: is a plan view of the first base plate of a recording head illustrating one example of the present invention;
- Fig. 3: is a partly cut sectional view of a recording head, through which ink drops are being jetted out, illustrating one example of the present invention;
- Fig. 4: is a sectional view of a recording head, through which ink drops are being jetted out, illustrating one example of the present invention;
- Fig. 5: is a partly cut perspective view of a recording head, through which ink drops are being jetted out, illustrating one example of the present invention;
- Fig. 6: is a partly cut side view of a recording head, through which ink drops are being jetted out, illustrating one example of the present invention;
- Fig. 7: is a plan view of the first base plate of a recording head illustrating another example of the present invention;
- Fig. 8: is a sectional view of a recording head, through which ink drops are being jetted out, illustrating another example of the present invention;
- Fig. 9: is a partly cut perspective view of a recording head, through which ink drops are being jetted out, illustrating another example of the present invention;
- Fig. 10: is a partly cut side view of a recording head, through which ink drops are being jetted out, illustrating another example of the present invention;
- Fig. 11: is a sectional view of a recording head, through which ink drops are being jetted out, illustrating a conventional example;
- Fig. 12: is a partly cut perspective view of a recording head, through which ink drops are being jetted out, illustrating a conventional example; and
- Fig. 13: is a partly cut side view of a recording head, through which ink drops are being jetted out, illustrating a conventional example.

The basic composition of the water-soluble ink to be used in the examples comprises first a water-soluble dye and second a solvent. As a water-soluble dye, the ink contains at least a compound having the structural formula [1], and the content of the said water-soluble dye is from 0.1 to 10 wt.% of the total weight of the water-soluble ink. If the content of said water-soluble dye is more than 10 wt.%, the ink tends to form precipitates by which the nozzles may become clogged. If the content is less than 0.1 wt.% the ink lacks sufficient print density when printed on paper. Even when the said water-soluble dye is combined with any other water-soluble dye in the ink, the content of the said water-soluble dye of formula 1 in the ink is at least 0.1 wt.% or more.

The solvent of the ink consists essentially of water (deionized water or pure water) and a mixture of various water-soluble organic solvents. As usable water-soluble organic solvents, those may be mentioned which have a low vapor pressure and which hardly vaporize and dry. They include polyalkylene glycols such as polyethylene glycol, polypropylene glycol and the like; glycerin; lower alkyl ethers of polyalcohols such as ethylene glycol monomethyl or ethyl ether, diethylene glycol monomethyl or ethyl ether and the like; N-methyl-2-pyrrolidone, 1,3-dimethyl-2-imidazolidi-none and the like; and other solvents having a low surface tension such as ethanol, isopropanol and the like.

The content of the water-soluble organic solvent in the water-soluble ink is from 1 to 70 wt.%, more preferably from 2 to 40 wt.%, of the total weight of the ink.

The content of water in the same is from 10 to 95 wt.%, more preferably from 40 to 90 wt.% of the total weight of the water-soluble ink.

The water-soluble ink of the present invention contains, in addition to the above-mentioned components, at least either one of an acetylene glycol surfactant having the chemical formula [2] and an acetylene glycol-ethylene oxide adduct surfactant having the chemical formula [3].

The acetylene glycol surfactant includes, for example, Surfynol 104, 104E, 104H, 104A and Surfynol TG (products of AIR PRODUCTS Co., USA); and the acetylene glycol-ethylene oxide adduct surfactant includes, for example, Surfynol 440, Surfynol 465 and Surfynol 485 (products of AIR PRODUCTS Co., USA) and Neocole 4410 (product of Nippon Emulsifier Co.,Japan).

The content of the above-mentioned acetylene glycol surfactant in the water-soluble ink is preferably within the range of from 0.01 to 0.1 wt.% of the total weight of the ink. A content of more than 0.1 wt.% cannot be dissolved with ink thereby increasing the viscosity of the ink. A content of less than 0.01 wt.% does not have enough effect, i.e. the ink does not dry immediately.

The content of the acetylene glycol-ethylene oxide (1 to 5 mols) adduct surfactant having the chemical formula [3] in the water-soluble ink is preferably within the range of from 0.01 to 0.1 wt.% of the total weight of the ink, based on the same reasons as those mentioned with respect to the surfactant of formula [2].

The content of the acetylene glycol-ethylene oxide (6 to 40 mols) adduct surfactant having the chemical formula [3] in the water-soluble ink is preferably within the range of from 0.1 to 10 wt.% of the total weight of the ink, based on the same reasons as those mentioned with respect to the surfactant of formula [2].

In addition, for the purpose of optimizing the physical data of the water-soluble ink of the present invention or of improving its characteristics, other additives such as a viscosity adjusting agent, an antiseptic and the like may be added to the ink.

Where the water-soluble ink as prepared from the above-mentioned components of the defined amounts is fed to a plastic recording head which is composed of a nozzle, a pressure chamber, a common ink chamber, a feed mouth and an ink flow pathway, for effecting recording operation, it causes neither dot-dropouts nor meandering of flying ink drops, thus satisfying the object of the present invention. After printing, the printed ink immediately dries and the printed image has improved water-proofness and light fastness. Moreover, the storage stability of the ink is high, the ink yields a high printing density OD value, the field of use of the ink is broadened to be applicable to various kinds plain paper, recycled paper etc., the nozzle of the recording head is hardly clogged with the ink, and the jetting response of the ink and the jetting stability of it are high. The water-soluble ink provided by the present invention has such various advantages.

Next, the basic constitution of the recording head of the ink jet printer as employed in the examples of the present invention and the driving process of the printer will be explained hereunder.

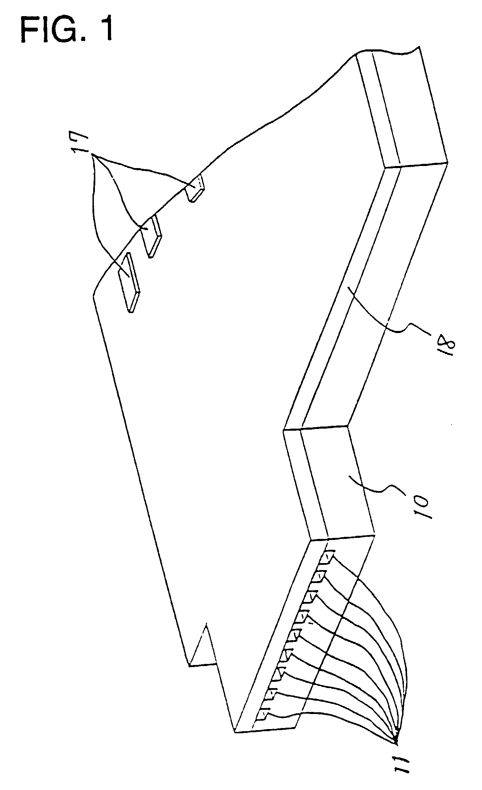

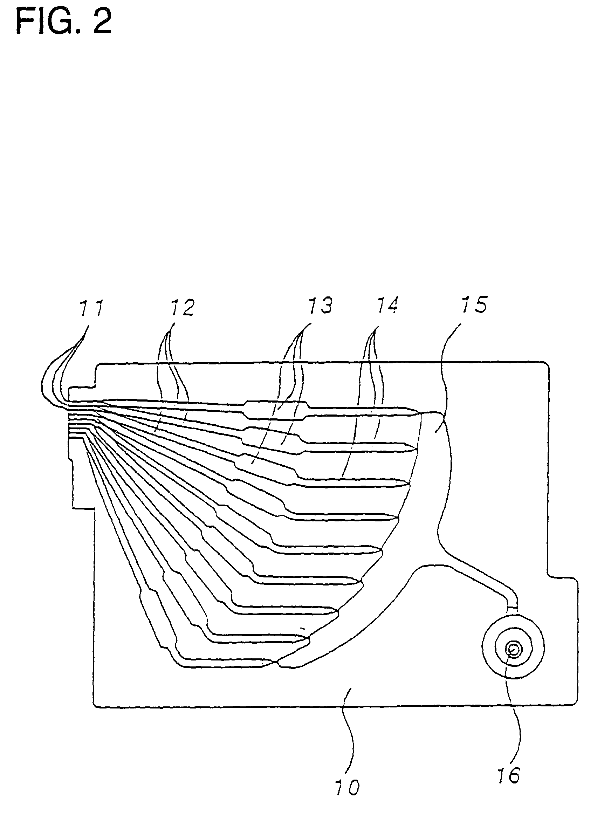

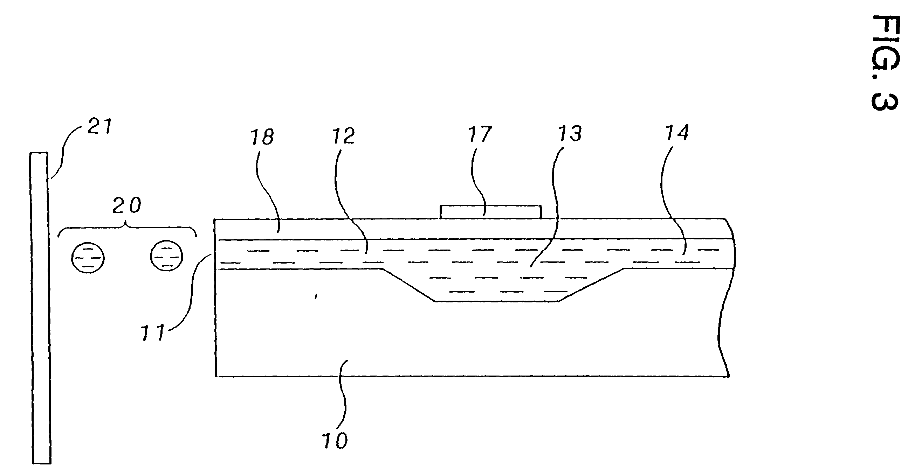

Fig. 1 is a partly cut perspective view of a recording head; Fig. 2 is a plan view of the first base plate of a recording head; and Fig. 3 is a partly cut sectional view of a recording head through which ink drops are jetted out. In these drawings, the same numbers indicate the same parts.

10 is a first base plate, which was formed by shaping a plastic resin, such as polysulfone, polycarbonate, polyether sulfone, polyallyl sulfone, polyacetal or the like, by molding or laser machining. 11 are nozzle orifices, 13 are pressure chambers, 15 is a common ink chamber, and 12 and 14 each are ink flow pathways on the nozzle side and the feed side, respectively, which have been formed by engraving the first base plate 10. 16 is an ink feed mouth. After a second base plate 18 has been stuck to the first base plate 10 by fusion or with an adhesive to form the ink flow pathways, piezoelectric elements 17 are stuck onto the second base plate with an adhesive, to face a respective pressure chamber 13 formed on the first base plate. 20 is a flying ink drop, and 21 is a recording medium.

The process of driving the ink jet printer of the present invention is as follows: An electric voltage is selectively applied to the piezoelectric elements 17 mounted on the second base plate 18, while the ink fed from the ink feed mouth 16 has been filled up to the nozzle orifices 11, whereby the piezoelectric elements 17 are bent to reduce the capacity of the pressure chamber 13 so that ink drops 20 are jetted out to fly towards the recording medium 21. After the ink drops 20 have adhered to the recording medium 21 and have been fixed thereon, recording is attained.

Next, examples of demonstrating printing operations with an ink jet printer equipped with the recording head of the present invention, using the water-soluble ink of the present invention, will be mentioned hereunder along with comparative examples, by which the effect of the present invention will be clarified concretely.

### Example 1

The components of table 1 were blended, well stirred for dissolution, and filtered through a membrane filter having a pore size of 0.8 µm. The resulting filtrate was put in a vacuum tank connected with a rotary pump via a thick rubber tube, the inside of the tank was evacuated by discharging the air therefrom, and the content in the tank was allowed to stand as it was for one hour (the operation is a de-foaming operation) to produce a water-soluble ink. During the de-foaming operation, the ink produced herein did not bubble and almost 100% of the de-foamed ink could be used in the following tests.

**Table 1**

| Colorant: | |
|---|---|
| Dye having the chemical structure of formula [6]: | 5.0 wt.% |
| | |

| Penetrating agent: | |
|---|---|
| Surfactant having the chemical structure of formula [3]: (where the molar number of ethylene oxide added (m+n) is from 6 to 40) | 5.0 wt.% |
| | |

| Antiseptic: | |
|---|---|
| Compound having the structure of formula [7]: | 0.2 wt.% |
| | |

| Solvent: | |
|---|---|
| Polyethylene glycol: | 10.0 wt.% |
| | |
| Water: | 79.8 wt.% |

The water-soluble ink was fed into an ink jet printer which had a recording head according to the present invention composed of the first base plate 10 molded from a polycarbonate and the second base plate 18 of a polycarbonate sheet, and ink drops were jetted out from the head. The profile of the nozzle orifices 11 of the recording head was trapezoidal, having a dimension of 60 µm (minor edge) x 70 µm (major edge) x 30 µm (height). The number of the nozzle orifices was 9; the nozzle pitch was 350 µm; and the driving voltage of the piezoelectric element was 35 V at a frequency of 2.0 kHz at room temperature.

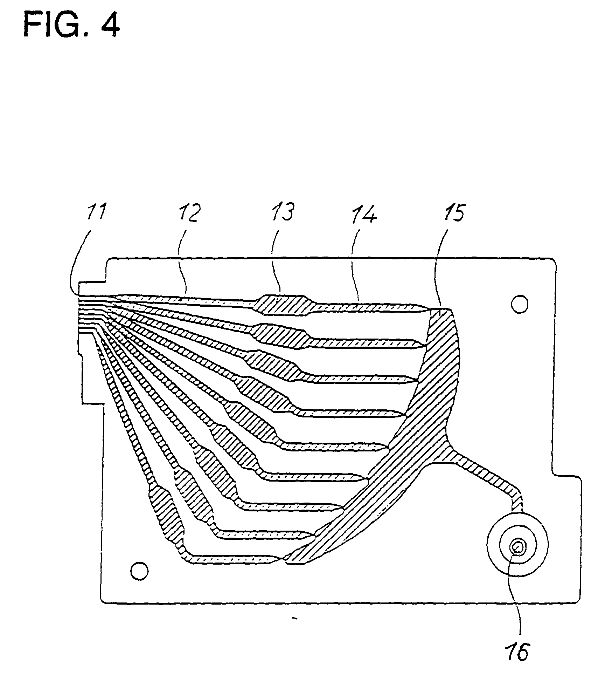

Fig. 4 is a sectional view (with the section taken along the interface between the two base plates) of the recording head of the present example during the course of jetting out ink drops therethrough, showing that all of the ink feed mouth 16, the common ink chamber 15, the ink flow pathways 14 on the feed side, the pressure chambers 13, the ink flow pathways 12 on the nozzle side and the nozzle orifices 11 were completely filled with the ink with no invasion of bubbles thereinto. Accordingly, printing operations were effected well, without yielding dot-dropouts.

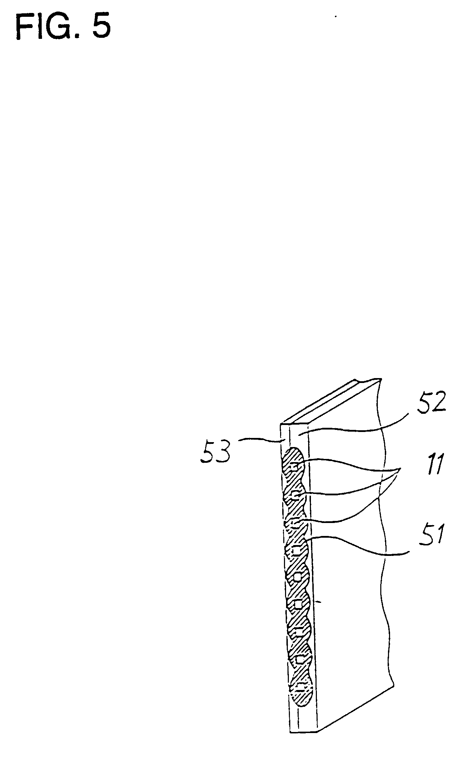

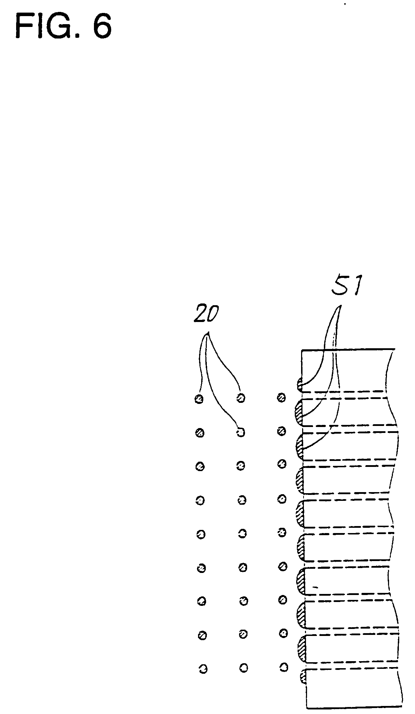

Fig. 5 is a partly cut perspective view of the above-mentioned recording head; and Fig. 6 is a partly cut side view of the recording head through which the ink is being jetted out. 11 are the nozzle orifices, 51 is ink which has wetted (or has adhered to) the peripheral portions of the nozzle orifices, 52 is an end face of the first base plate, 53 is an end face of the second base plate, and 20 are flying ink drops.

Since the ink 51 uniformly wetted the peripheral portions of the nozzle orifices 11 as shown in Fig. 5, the ink drops 20 were jetted out to fly vertically to the end faces 52 and 53 of the first and second base plates, respectively, as shown in Fig. 6. Therefore, the recording medium was printed with the ink on the intended regular position, and the quality of the printed letters was good.

Using the ink of the present example, printing was effected on neutral paper PPC (produced by Fuji Xerox Co., Ltd.), acidic paper for registration (produced by Dai-Showa Paper Mfg. Co., Ltd.), 45 kg-weight high-quality paper (produced by Jujo Paper Co., Ltd.), and *recycled* paper "Yamayuri (trade name)" (produced by Honshu Paper Co., Ltd.), whereupon the time needed during the course from penetration of the ink into the paper to drying of the penetrated ink thereon was observed with the naked eye to the result of one second or less in every case. Thus, in accordance with the present invention, the ink drying time is extremely short irrespective of the characteristics of the kind of paper, i.e., neutral paper, acidic paper or *recycled* paper.

Next, the print density of the printed papers was measured with a densitometer (Print Contrast Meter, manufactured by Macbeth Co.). A filter having a visible ray-sensitive characteristic with the maximum transmittance at about 550 nm was inserted into the densitometer and the reflectivity of the printed dots was measured. Although the reflectivity somewhat varied depending upon the kind recording medium (printing paper), the average reflectivity measured was 8 %. From this value, the print density was calculated to be 1.1 as an optical reflective density OD value (the OD value is defined as OD = -log(R/100), where R is the reflectivity). In view of the OD value being 1.1 (with use of the above mentioned filter), the printed dots give sufficient black appearance when seen with the naked eye.

In addition, the printed papers were dipped in static water for one hour, whereupon the bleeding of the ink on them, if any, was checked. As a result, the bleeding was only slight. The print density of the dipped papers was again measured with the above-mentioned densitometer (using the same filter) to the result that the mean reflectivity was 10%. From this, the OD value was calculated to be 1.0.

Next, the printed papers were exposed to the sun light for one month to check the degree of the decrease of the print density, if any. As a result, there was almost no decrease of the print density, and the OD value of the printed papers after this exposure was 1.06 as an average. Thus, by using the water-soluble ink and the ink jet printer of the present invention, printed papers having excellent water-proofness and light fastness are obtained.

Next, the flow pathways of the above-mentioned recording head were filled with the water-soluble ink and the head was put in a thermostat of 50°C for 30 days. After having been taken out therefrom, the head was allowed to stand at room temperature for one day. After this procedure, all the ink was well discharged from the ink flow pathways of the recording head with a pump. Where the ink was jetted out from the head as treated in the manner mentioned above, flying of the ink drops was stable, like that before the treatment. From these facts, it is understood that there is almost no vaporization of the ink in the flow pathways in the recording head during the treatment and that the ink formed no solid precipitates during it.

Further, the water-soluble ink was put in a glass laboratory bottle, then the bottle was hermetically sealed and stored at 70°C for 6 months or the ink in the bottle was frozen in a freezer and stored therein for 6 months. After the storage, the ink was brought back to room temperature, whereupon the physical properties of the ink, such as its viscosity and surface tension, did not differ at all from those before the treatment and the ink formed no solid precipitates. Thus, the long term storage stability of the ink under high temperature or low temperature condition is good.

In addition, the water-soluble ink was put in a glass laboratory bottle along with samples of polysulfone, polycarbonate, polyether sulfone and polyacetal, and the bottle was hermetically sealed and stored in a thermostat of 80°C for 2 months. After the storage, the surface condition of the individual plastic samples was checked to reveal the result that their surface was not roughened. From this result, it is understood that the water-soluble ink of the present invention, though containing a surfactant, does not roughen the surface of plastic materials.

### Comparative Example 1

The components of table 2 were blended to produce a water-soluble ink, in the same manner as in Example 1. This ink was de-foamed in the same manner as in Example 1, but the ink formed bubbles and a half of the ink was lost due to bubbling. Thus, the producibility of the ink was low.

**Table 2**

| Colorant: | |
|---|---|
| Dye having the chemical structure of formula [6]: | 5.0 wt.% |
| | |

| Penetrating Agent: | |
|---|---|
| Polyoxyethylene nonylphenyl ether surfactant: | 5.0 wt.% |
| | |

| Antiseptic: | |
|---|---|
| Compound having the structure of formula [7]: | 0.2 wt.% |
| | |

| Solvent: | |
|---|---|
| Polyethylene glycol: | 10.0 wt.% |
| | |
| Water: | 79.8 wt.% |

The water-soluble ink that remained without bubbles was fed to the recording head of Example 1, through which ink drops were jetted out. The structure of the recording head and its driving condition were same as those in Example 1.

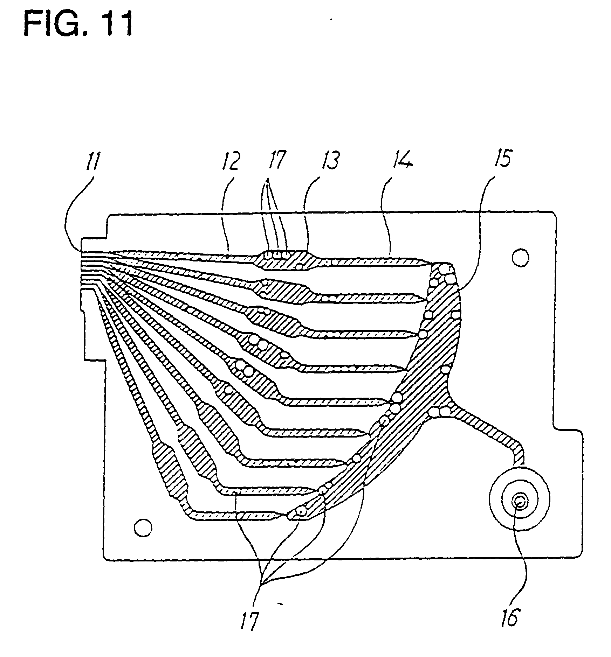

Fig. 11 is a sectional view, like that of Fig. 4, of the recording head, from which ink drops of Comparative Example 1 are being jetted out. All the parts of from the ink feed mouth 16 to the nozzle orifices 11 are filled with the ink except for bubbles 17. As shown in the drawing, bubbles 17 invaded into the ink feed mouth 16 , the common ink chamber 15, the ink flow pathways 14 on the feed side, the pressure chambers 13 and the ink flow pathways 12 on the nozzle side. The diameter of the bubbles was approximately from 0.05 to 0.1 mm.

The reason of bubbling of the ink is that the above-mentioned water-soluble dye, which is a colorant of the ink, and the above-mentioned surfactant, which is a penetrating agent of it, have a bubbling property and the other components of the ink do not have a de-foaming effect so that the ink is bubbled when it is fed into the head via a pump.

Even if an electric voltage is applied to a piezoelectric element under the condition of bubbles existing in the pressure chamber 13, so as to bend the element to reduce the volume of the pressure chamber 13, the bubbles would be compressed and thereby compensate for the reduced volume so that the ink could not be jetted out through the head to the result of causing a lot of missing dots in the printed articles. As a result, reading of the letters as printed under such condition was difficult.

Next, the water-soluble ink was put in the same glass laboratory bottle as that employed in Example 1, along with samples of polysulfone, polycarbonate, polyether sulfone and polyacetal, and the bottle was hermetically sealed and stored in a thermostat of 80°C for 2 months. Then, the surface condition of the individual plastic samples was checked to reveal the result that the polycarbonate and polyacetal were whitened and their surface was roughened.

### Example 2

The components of table 3 were blended and formed into a water-soluble ink in the same manner as in Example 1.

**Table 3**

| Colorant: | |
|---|---|
| Dye having the chemical structure of formula [8]: | 0.1 wt.% |
| | |
| Dye having the chemical structure of formula [9]: | 5.0 wt.% |
| | |

| Penetrating Agent: | |
|---|---|
| Surfactant having the chemical structure of formula [2]: | 0.1 wt.% |
| | |

| Solvent: | |
|---|---|
| Triethylene glycol: | 15.0 wt.% |
| | |
| Water: | 79.8 wt.% |

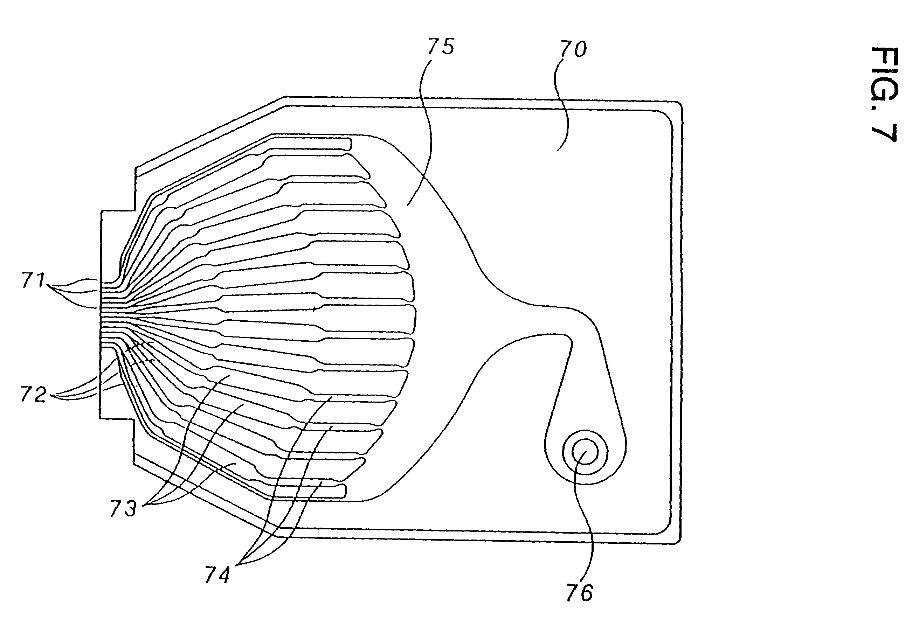

Fig. 7 is a plan view of the first base plate of the recording head of the present invention as employed for printing with this water-soluble ink. 70 is the first base plate of polysulfone, having ink flow pathways 72 and 74 on the nozzle side and on the feed size, respectively, a common ink chamber 75, pressure chambers 73 and nozzle orifices 71 engraved with laser rays. 76 is an ink feed mouth. The water-soluble ink was fed into the ink jet printer of the present invention having the recording head composed of the first base plate 70 and a second base plate of a polysulfone sheet, and ink drops were jetted out through the head. The profile of the nozzle orifices 71 of the recording head was rectangular, having a dimension of 37 µm (width) x 26 µm (height). The number of the nozzle orifices was 12; the nozzle pitch was 282 µm; and the driving voltage of the piezoelectric element was 33 V at a frequency of 2.2 kHz at room temperature.

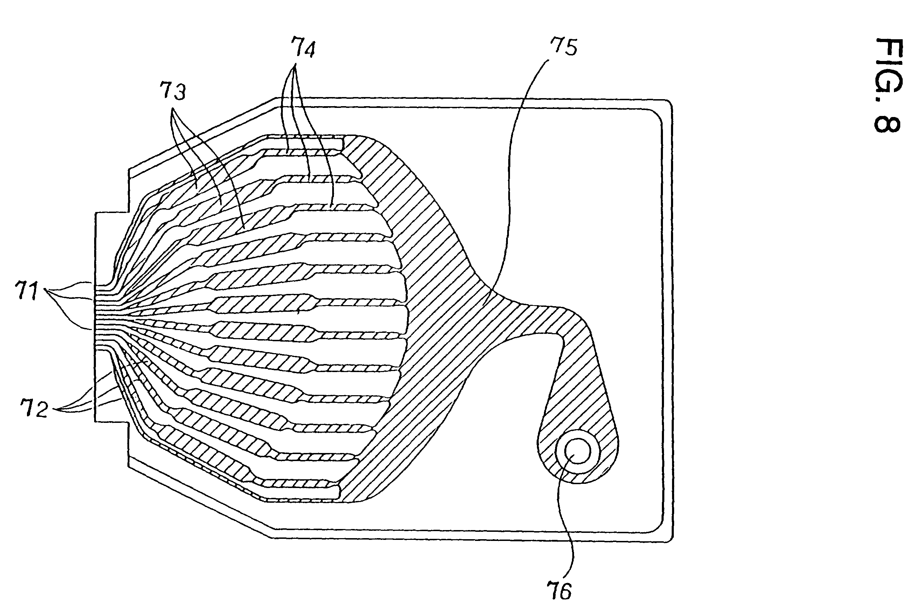

Fig. 8 is a sectional view (similar to that of Fig. 4) of the recording head of the present example during the course of jetting out ink drops therethrough, in which all of the ink feed mouth 76, the common ink chamber 75, the ink flow pathways 74 on the feed side, the pressure chambers 73, the ink flow pathways 72 on the nozzle side and nozzle orifices 71 were completely filled with the ink with no invasion of bubbles thereinto. Accordingly, printing operations were effected well, without yielding dot-dropouts.

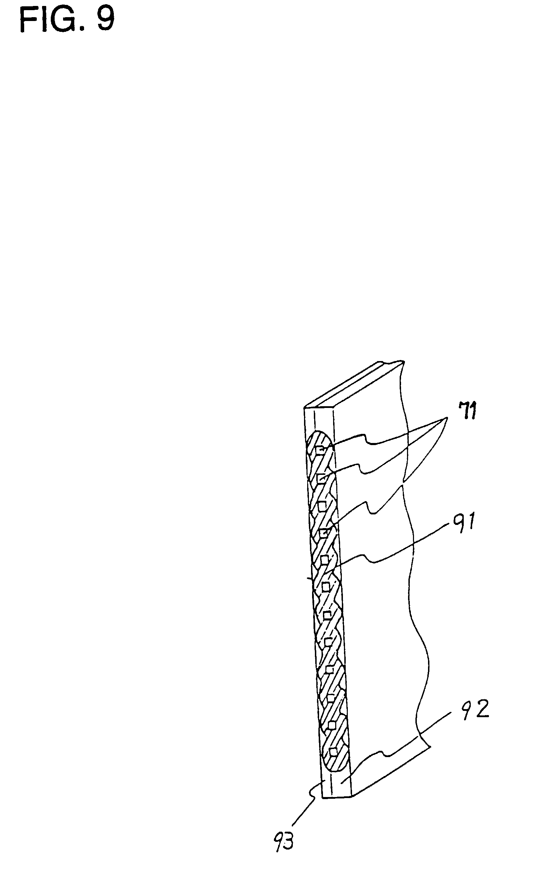

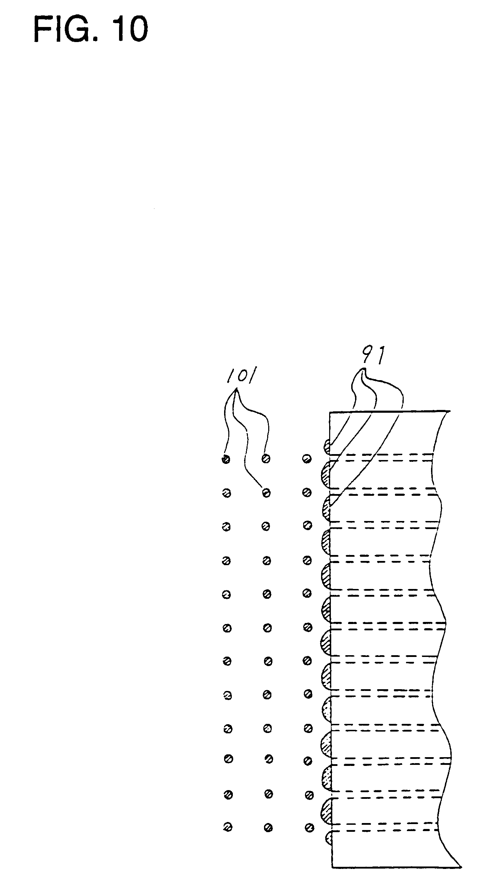

Fig. 9 is a partly cut perspective view of the above-mentioned recording head; and Fig. 10 is a partly cut side view of the recording head through which the ink is being jetted out. 71 are the nozzle orifices, 91 is ink which has wetted (or has adhered to) the peripheral portions of the nozzle orifices, 92 is an end face of the first base plate, 93 is an end face of the second base plate, and 101 are flying ink drops.

Since the ink 91 uniformly wetted the peripheral portions of the nozzle orifices 71 as shown in Fig. 9, the ink drops 101 were jetted out to fly vertically to the end faces 92 and 93 of the first and second base plates, respectively, as shown in Fig. 10. Therefore, the recording medium was printed with the ink on the intended regular position, and the quality of the printed letters was good.

Using the ink and the recording head of the present example, printing was effected on various papers same as those used in Example 1, whereupon the time needed during the course from penetration of the ink into the paper to drying of the penetrated ink thereon was observed with the naked eye to the result of one second or less in every case.

Next, the print density of the printed papers was measured with the above-mentioned densitometer. As a result, the reflectivity through the visible ray filter having the maximum transmittance at about 550 nm was 7% as an average. From this value, the print density was calculated to be 1.15 as an optical reflective density OD value. In view of the OD value being 1.15 (with the said filter), the printed dots give sufficient black appearance when seen with the naked eye.

In addition, the printed papers were dipped in static water for one hour, whereupon the bleeding of the ink on them, if any, was checked. As a result, the bleeding was only slight. The print density of the dipped papers was again measured with the same densitometer to the result that the mean reflectivity was 9%. From this, the OD value was calculated to be 1.0.

Next, the printed papers were exposed to the sun light for one month to check the degree of the decrease of the print density, if any. As a result, there was almost no decrease of the print density, and the OD value of the printed papers after exposure under this condition was 1.1 as an average.

Further, the jetting stability of the recording head after having been left for a long period of time and the long-time storage stability of the ink were tested in the same manner as in Example 1. As a result, stable jetting of the ink was possible after the tests, in which neither change of the physical properties of the ink nor formation of solid precipitates in the ink was observed.

### Comparative Example 2

The components of table 4 were blended to produce a water-soluble ink, in the same manner as in Example 1. The ink was de-foamed in the same manner as in Example 1. However, like the case of Comparative Example 1, the ink formed bubbles and a half of the ink was lost due to bubbling. Thus, the producibility of the ink was low.

**Table 4**

| Colorant: | |
|---|---|
| Dye having the chemical structure of formula [8]: | 5.0 wt.% |
| | |

| Solvent: | |
|---|---|
| Triethylene glycol: | 15.0 wt.% |
| | |
| Water: | 80.0 wt.% |

The water-soluble ink which remained without bubbles was fed to the recording head of Example 2, through which ink drops were jetted out. The structure of the recording head and its driving condition were same as those in Example 2.

Since the above-mentioned water-soluble dye in the ink has a bubbling property and the other components of the ink do not have a de-foaming effect, the ink bubbled when it was fed into the head via a pump, like the case of Comparative Example 1. As a result, many bubbles invaded into the ink flow pathways and the pressure chamber so that jetting of ink drops from the head was nearly impossible and the printed letters missed a lot of dots. Therefore, correct reading of the printed letters was difficult.

Using the ink, various papers as employed in Example 1 were printed with letters, whereupon the time needed for drying the printed ink was measured to be one minute or more. Thus, the ink used herein is not a quick-drying one. When the letters as printed with the ink are touched with the hand before the ink is not dried as yet, they would be blurred and therefore could not be read correctly.

In addition, after the ink on the papers dried up, the printed papers were dipped in static water for one hour, whereupon the bleeding of the ink on them was checked. As a result, almost all the ink dissolved out into the water so that the print density noticeably lowered and correct reading of the printed letters was impossible.

Next, the printed papers were exposed to the sun light for one month to check the degree of the decrease of the print density. As a result, the OD value of the printed letters noticeably decreased to 0.65, as an average, from 1.25 before the exposure.

### Comparative Example 3

The components of table 5 were blended and formed into a water-soluble ink, in the same manner as in Example 1.

**Table 5**

| Colorant: | |
|---|---|
| Dye having the chemical structure of the formula [9]: | 4.0 wt.% |
| | |

| Penetrating Agent: | |
|---|---|
| Surfactant having the chemical structure of the formula [3] (where the molar number of ethylene oxide (m+n) is from 6 to 40): | 1.0 wt.% |
| | |

| Solvent: | |
|---|---|
| Glycerin: | 17.0 wt.% |
| | |
| Water: | 78.0 wt.% |

The water-soluble ink was fed into the recording head of Example 1, from which ink drops were jetted out. The driving condition for the recording head was the same as that in Example 1.

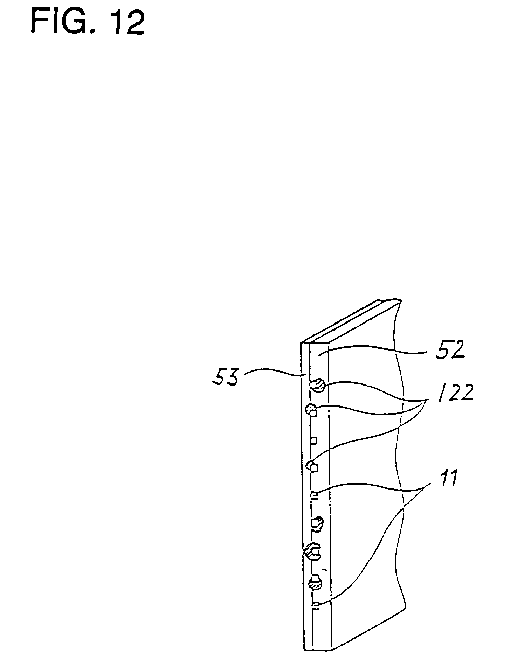

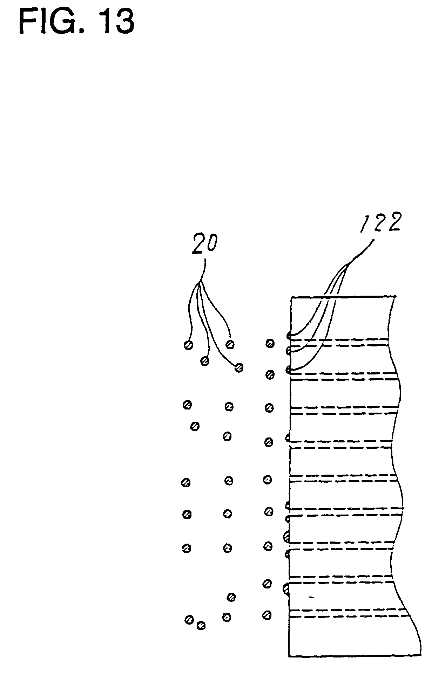

Fig. 12 is a partly cut perspective view of the recording head of Comparative Example 3, from which ink drops were being jetted out; and Fig. 13 is a partly cut sectional view of the recording head during jetting. 11 are the nozzle orifices; 122 is ink that adhered to the peripheral portions of the nozzle orifices; 52 is the end face of the first base plate; 53 is the end face of the second base plate; and 20 are flying ink drops. Since the peripheral portions of the nozzle orifices 11 are not uniformly wetted with the ink 122, the jetted ink drops 20 are attracted by the ink that adhered to the peripheral portions of the nozzle orifices so that they fly with meandering to the vertical direction of the end faces of the first and second base plates, as shown in Fig. 13. Where the ink of Comparative Example 3 is used in printing with the above-mentioned recording head, the jetted ink drops meander and the printed letters could not be read correctly.

### Examples 3 to 7

The components of the following tables 6 to 10, respectively, were blended and well stirred for dissolution to prepare inks of Examples 3 to 7, in the same manner as in Example 1. Each ink thus prepared was filtered through a membrane filter having a pore size of 0.8 µm and then de-foamed in the same manner as in Example 1. Thus, various water-soluble inks were prepared.

**Table 6**

| Colorant: | |
|---|---|
| Dye having the chemical structure of the formula [10]: | 2.50 wt.% |
| | |

| Penetrating Agent: | |
|---|---|
| Surfactant having the chemical structure of the formula [3] (where the molar number of ethylene oxide (m+n) is from 6 to 40): | 1.00 wt.% |
| | |
| Surfactant having the chemical structure of the formula [3] (where the molar number of ethylene oxide (m+n) is from 1 to 5): | 0.05 wt.% |
| | |

| Antiseptic: | |
|---|---|
| Compound having the structure of the formula [7]: | 0.30 wt.% |
| | |

| Solvent: | |
|---|---|
| Glycerin: | 20.00 wt.% |
| | |
| Triethylene glycol: | 2.00 wt.% |
| | |
| Water: | 74.15 wt.% |

**Table 7**

| Colorant: | |
|---|---|
| Dye having the chemical structure of the formula [11]: | 1.0 wt.% |
| | |

| Penetrating Agent: | |
|---|---|
| Surfactant having the chemical structure of the formula [3] (where the molar number of ethylene oxide (m+n) is from 1 to 5): | 0.1 wt.% |
| | |

| Solvent: | |
|---|---|
| Diethylene glycol monomethyl ether: | 12.0 wt.% |
| | |
| Water: | 86.9 wt.% |

**Table 8**

| Colorant: | |
|---|---|
| Dye having the chemical structure of the formula [10]: | 1.5 wt.% |
| | |

| Penetrating Agent: | |
|---|---|
| Surfactant having the chemical structure of the formula [2]: | 0.1 wt.% |
| | |
| Surfactant having the chemical structure of the formula [3] (where the molar number of ethylene oxide (m+n) is from 6 to 40): | 0.5 wt.% |
| | |

| Solvent: | |
|---|---|
| Polypropylene glycol: | 18.0 wt.% |
| | |
| Water: | 79.9 wt.% |

**Table 9**

| Colorant: | |
|---|---|
| Dye having the chemical structure of the formula [6]: | 3.00 wt.% |
| | |

| Penetrating Agent: | |
|---|---|
| Surfactant having the chemical structure of the formula [2]: | 0.05 wt.% |
| | |
| Surfactant having the chemical structure of the formula [3] (where the molar number of ethylene oxide (m+n) is from 1 to 5): | 0.10 wt.% |
| | |

| Solvent: | |
|---|---|
| Ethylene glycol monoethyl ether: | 25.00 wt.% |
| | |
| Water: | 71.85 wt.% |

**Table 10**

| Colorant: | |
|---|---|
| Dye having the chemical structure of the formula [12]: | 6.00 wt.% |
| | |

| Penetrating Agent: | |
|---|---|
| Surfactant having the chemical structure of the formula [2]: | 0.02 wt.% |
| | |
| Surfactant having the chemical structure of the formula [3] (where the molar number of ethylene oxide (m+n) is from 6 to 40): | 2.00 wt.% |
| | |
| Surfactant having the chemical structure of the formula [3] (where the molar number of ethylene oxide (m+n) is from 1 to 5): | 0.02 wt.% |
| | |

| Solvent: | |
|---|---|
| glycerin: | 11.00 wt.% |
| | |
| Water: | 80.96 wt.% |

Each water-soluble ink of Examples 3 to 7 was tested in the same manner as in Example 1, using the recording head of Example 1 under the same driving condition as in Example 1. The test results of Examples 1 and 2 and those of Comparative Examples 1 to 3 are shown in Table 11, along with the test results of Examples 3 to 7.

**Table 11**

| TEST ITEMS | EXAMPLES | | | | | | | COMPARATIVE EXAMPLES | | |
|---|---|---|---|---|---|---|---|---|---|---|
| | 1 | 2 | 3 | 4 | 5 | 6 | 7 | 1 | 2 | 3 |
| Dot-dropouts | o | o | o | o | o | o | o | X | X | - |
| Meandering of flying drops | o | o | o | o | o | o | o | - | - | X |

| Ink drying time | | | | | | | | | | |
|---|---|---|---|---|---|---|---|---|---|---|
| PPC paper | o | o | o | o | o | o | o | - | X | - |
| Register paper | o | o | o | o | o | o | o | - | X | - |
| High-quality paper | o | o | o | o | o | o | o | - | X | - |
| Regenerated paper | o | o | o | o | o | o | o | - | X | - |

| Print density | | | | | | | | | | |
|---|---|---|---|---|---|---|---|---|---|---|
| PPC paper | o | o | o | o | o | o | o | - | o | - |
| Register paper | o | o | o | o | o | o | o | - | o | - |
| High-quality paper | o | o | o | o | o | o | o | - | o | - |
| Regenerated paper | o | o | o | o | o | o | o | - | o | - |
| Waterproofnes | o | o | o | o | o | o | o | - | X | - |
| Light fastness | o | o | o | o | o | o | o | - | X | - |
| High-temperature exposure of recording head | o | o | o | o | o | o | o | - | - | - |
| Long-time storage stability | o | o | o | o | o | o | o | - | - | - |
| Amount of remained ink | o | o | o | o | o | o | o | X | X | - |
| Applicability to plastics | o | o | o | o | o | o | o | X | - | - |

In Table 11, the criteria for evaluation of the test items are as follows:
(1) Dot-dropouts;
   "O" indicates no missing dots during printing, and
   "X" indicates dot-drop-outs occurred once or more during printing.
(2) Meandering of flying ink drops;
   "O" indicates no meandering of flying ink drops, and
   "X" indicates meandering of flying ink drops.
(3) Ink drying time, the ink drying time in printing on PPC paper, register paper, high-quality paper and regenerated paper was measured.
   "O" indicates that the drying time was less than several seconds, and
   "X" indicates that the drying time was several seconds or more.
(4) Print density, the density of the letters as printed on PPC paper, register paper, high-quality paper and regenerated paper was measured with a densitometer, into which a visible ray-sensitive filter having the maximum transmittance at about 550 nm was inserted, to obtain the reflectivity R (%) of the printed dots. The OD value was obtained from the equation OD value = -log (R/100).
   "O" indicates that the OD value was 1.0 or more, and
   "X" indicates that the OD value was less than 1.0
(5) For the result of the test of dipping the printed papers in water ("water-proofness" in the table), the printed PPC papers were dipped in static water for one hour whereupon the degree of the bleeding, if any, of the printed letters was checked.
   "O" indicates almost no bleeding, and
   "X" indicates that the printed letters bled so that correct reading of them was impossible.
(6) For the result of the test of exposing the printed papers to the sun light ("light fastness" in the table), the printed PPC papers were exposed to the sun light for one month whereupon the degree of the depression, if any, of the OD value of the printed letters was checked.
   "O" indicates almost no depression of the OD value of the printed letters, and
   "X" indicates that the OD value of the printed letters decreased.
(7) For high-temperature exposure of recording head, the recording head as filled with the ink in the flow pathways was left in a thermostat of 50°C for 30 days.
   "O" indicates that the ink could be discharged from the ink flow pathways of the recording head by a pump, after the test period, and
   "X" indicates that the ink could not be discharged from the ink flow pathways of the recording head by a pump, after the test period.
(8) For long-time storage stability of ink, the ink was put in the glass laboratory bottle of Example 1 and sealed with a lid, and this was stored in the freezer zone of a refrigerator or in a thermostat of 70°C for 6 months.
   "O" indicates that the physical properties of the ink did not change and the ink gave no solid precipitates after the test period, and
   "X" indicates that either the physical properties of the ink changed or the ink gave solid precipitates after the test period.
(9) For applicability of ink to plastics, the ink was put in the glass laboratory bottle of Example 1 along with samples of polysulfone, polycarbonate, polyether sulfone and polyacetal and sealed, and this was stored in a thermostat of 80°C for 2 months.
   "O" indicates that the plastic samples were not whitened and their surface was not roughened after the test period, and
   "X" indicates that the plastic samples were whitened or their surface was roughened after the test period.
(10) For amount of remained ink after de-foaming treatment;
   "O" indicates that the amount of the ink which remained after the de-foaming treatment was 90 % or more,
   "_" indicates that the amount of the ink which remained after the de-foaming treatment was within the range of from 60 to 90%, and
   "X" indicates that the amount of the ink which remained after the de-foaming treatment was less than 60 %.

In Table 11 above, "-" indicates that the ink was not tested.

As shown in Table 11, the ink samples of Examples 1 to 7 gave good results with respect to all the test items of dot-dropouts, meandering of flying ink drops, ink drying time, print density of printed letters, water-proofness, light fastness and applicability to plastics. In addition, even though the recording head having the ink therein was exposed to a high-temperature condition, the ink did not give solid precipitates and it could well be discharged from the flow pathways of the head by a pump. Thus, stable jetting of the ink through the head was possible. Even though the ink was left in a high-temperature or low-temperature condition for a long period of time, the physical properties of the ink did not vary at all and the ink gave no solid precipitates. In addition, the amount of the ink as remained after the de-foaming treatment was sufficiently large.

However, using the inks of Comparative Examples 1 to 3, many dot-dropouts occurred and the flying ink drops meandered during printing, or the ink damages plastic materials, or a large portion of the ink was lost during the de-foaming treatment due to bubbling. The inks of these comparative examples could not attain the object of the present invention.

As mentioned above, the present invention has the following excellent advantages.
(1) By incorporating a water-soluble dye having a structure of the formula [1] as a colorant, into a water-soluble ink, the water-soluble ink acts to stably wet the ink flow pathways in a plastic recording head and also the peripheral portions of the nozzle orifices, due to the affinity of the dye for inner surface of the plastics head. Accordingly, even though base plates are made of a plastic, no bubble invades into the ink flow pathways and the printed letters are free from missing dots. In addition, since the peripheral portions of the nozzle orifices are uniformly and stably wetted with the ink, the flying ink drops do not meander during the printing operation. Therefore, the ink of the present invention has an advantage of high-quality printed images and a plastic head can be utilized.
(2) Since the base plates of the recording head are made of a plastic, manufacture of the head may be effected by molding or laser machining and the manufacture step may be shortened. Thus, the manufacture cost of the recording head and therefore the manufacture cost of the printer may be reduced advantageously.
(3) By incorporating an acetylene glycol surfactant having a chemical structure of the formula [2], or an acetylene glycol-ethylene oxide adduct surfactant having a chemical structure of the formula [3] into a water-soluble ink, the surface tension of the ink is lowered so that the contact angle of the ink to any and every paper is reduced (to less than 10° in most cases). Accordingly, the ink as adhered to paper by printing may immediately penetrate into the paper and is dried, even though any hot air blowing device or heat generating lamp is not provided in the printer. In addition, the printed letters are not blurred during the course from adhesion of the ink to paper to drying of the adhered ink on it.
(4) Since the dye penetrates into paper and dyes the fibers of the paper, the water-proofness and light fastness of the printed letters are improved advantageously.
(5) The water-soluble dye having a chemical structure of the formula [1] of the present invention bubbles, when dissolved in water. Surfactants which lower the surface tension of the solution containing them generally bubble with ease. However, since the above-mentioned surfactants employed in the present invention all have a great de-foaming action, they may retard the bubbling property of the water-soluble dye of the present invention. Therefore, the ink of the present invention may well be fed into the recording head without introduction of bubbles into the ink flow pathways and the pressure chambers of the head, and it is free from failure of jetting of ink drops from the head due to bubbles and is also free from dot-dropouts during printing with it. In addition, even though the ink is subjected to de-foaming treatment, it does not bubble out during the treatment. Therefore, the producibility of the ink of the present invention is advantageously high.
(6) Even though the above-mentioned surfactants are added to the ink of the present invention, the ink does not damage plastic materials. Therefore, in planning printers to which the ink of the present invention is applied, definition of the materials of forming printers is unnecessary.
(7) The ink jet printer recording head and the water-soluble ink of the present invention both have advantages of necessary requirements common to ordinary ink jet printers. That is, using the ink of the invention, the nozzle of the recording head is hardly clogged. In addition, the jetting stability and the jetting responsibility of the ink of the invention through the head of the printer are advantageously excellent.
(8) The water-soluble ink of the present invention has an additional advantage of high storage stability under high-temperature or low-temperature condition.

These advantages are achieved from the combination of a specific surfactant and a specific dye which causes a synergistic effect.

### List of Formulae

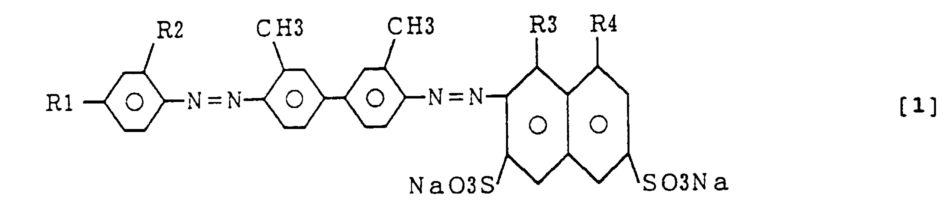

(where R1 to R4 each represents an OH group or NH₂ group) 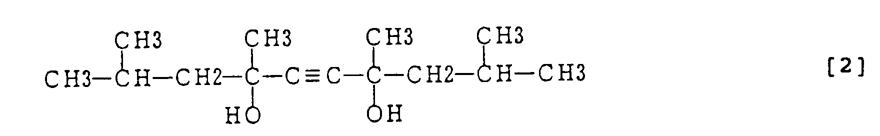 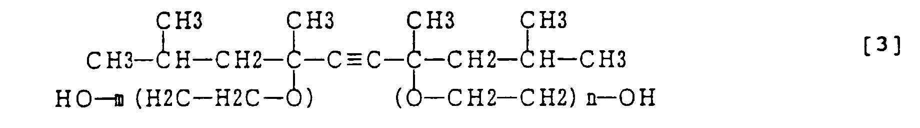 (where m and n each represent an integer of 1 or more) 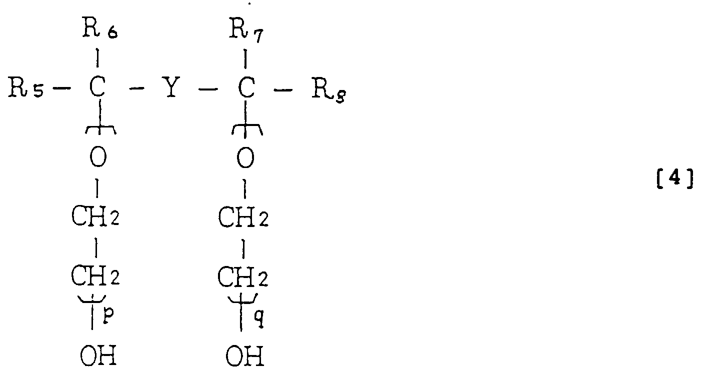 (where R₅ to R₈ each represent an alkyl group, p and q each represent an integer of 1 or more, and Y represents an acetylene group)

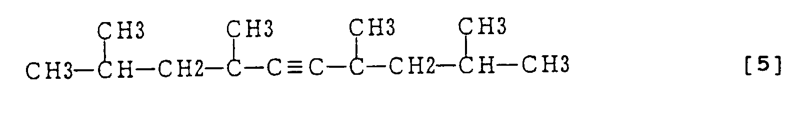

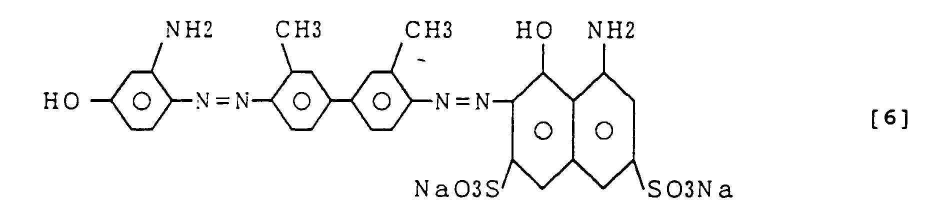

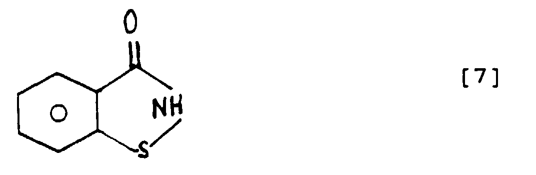

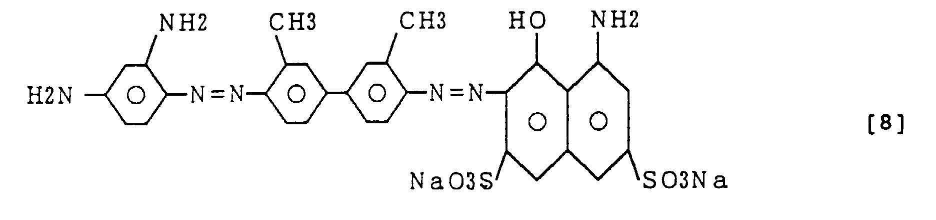

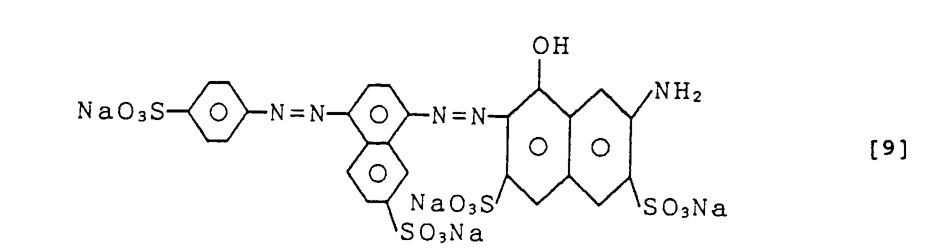

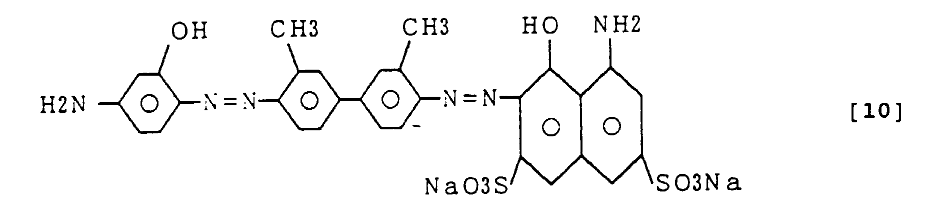

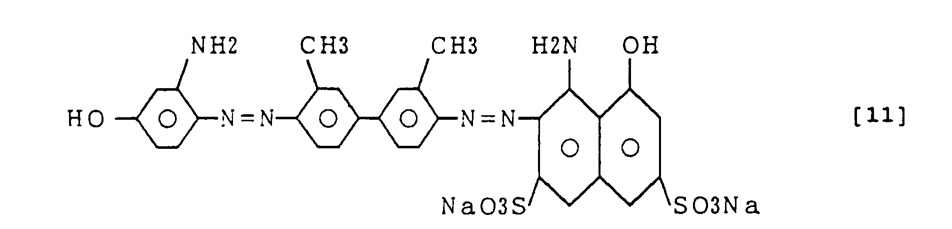

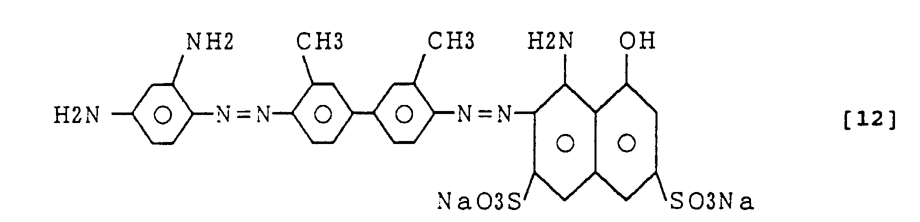

## Claims

1. A water-soluble ink at least comprising a water-soluble dye, a water-soluble organic solvent and water (deionized water or pure water), which contains at least a water-soluble dye having a chemical structure of the following formula [1] 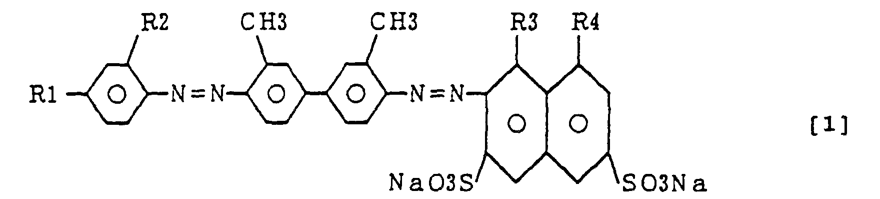 (where R1 to R4 each represents an OH group or NH₂ group)
and either one or both of an acetylene glycol surfactant having a chemical structure of the following formula [2] 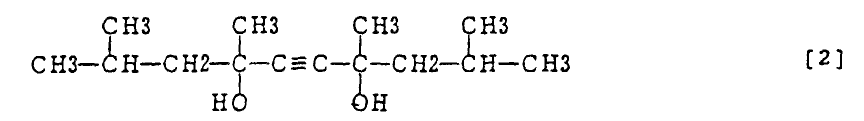
and an acetylene glycol-ethylene oxide adduct surfactant having a chemical structure of the following formula [3] 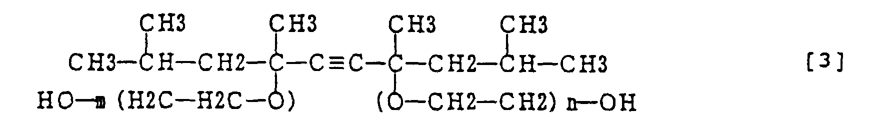
(where m and n each represent an integer of 1 or more).

2. The water-soluble ink as claimed in claim 1, including an amount of from 0.1 to 10.0 wt.% of said water-soluble dye and an amount of from 0.01 to 0.1 wt.% of said acetylene glycol surfactant.

3. The water-soluble ink as claimed in claim 1, including an amount of from 0.1 to 10.0 wt.% of said water-soluble dye and an amount of from 0.01 to 0.1 wt.% of said acetylene glycol-ethylene oxide adduct surfactant with 1 ≤ (m + n) ≤ 5.

4. The water-soluble ink as claimed in claim 1, including an amount of from 0.1 to 10.0 wt.% of said water-soluble dye and an amount of from 0.1 to 10 wt.% of said acetylene glycol-ethylene oxide adduct surfactant with 6 ≤ (m + n) ≤ 40.

5. The water-soluble ink as claimed in claim 2, further including an amount of from 0.01 to 0.1 wt.% of said acetylene glycol-ethylene oxide adduct surfactant with 1 ≤ (m + n) ≤ 5.

6. The water-soluble ink as claimed in claim 2, further including an amount of from 0.1 to 10 wt.% of said acetylene glycol-ethylene oxide adduct surfactant with 6 ≤ (m + n) ≤ 40.

7. The water-soluble ink as claimed in claim 1 or 2, including an amount of from 0.1 to 10.0 wt.% of said water-soluble dye, an amount of from 0.01 to 0.1 wt.% of said acetylene glycol-ethylene oxide adduct surfactant with 1 ≤ (m + n) ≤ 5, and an amount of from 0.1 to 10 wt.% of said acetylene glycol-ethylene oxide adduct surfactant with 6 ≤ (m + n) ≤ 40.

8. Use of the water-soluble ink as claimed in any one of the preceding claims, in an ink jet printer having an ink jet recording head made from plastics.

9. A recording head for an ink jet printer composed of base plates made from a plastic material and comprising an ink supply port (16), a common ink chamber (15) and at least one set of a nozzle (11), a pressure chamber (13) and an ink flow pathway (12, 14) for connecting said common ink chamber, said pressure chamber and said nozzle, said recording head being characterized by using a water-soluble ink as claimed in any one of claims 1 to 7.

## Patentansprüche

1. Wasserlösliche Tinte, die mindestens einen wasserlöslichen Farbstoff, ein wasserlösliches organisches Lösungsmittel und Wasser (entionisiertes Wasser oder reines Wasser) umfaßt, enthaltend mindestens einen wasserlöslichen Farbstoff der folgenden chemischen Strukturformel [1] 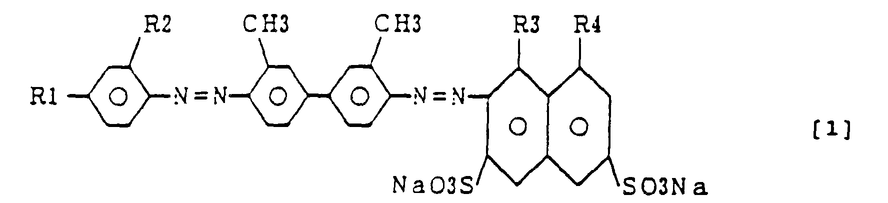 (worin R1 bis R4 jeweils eine OH-Gruppe oder eine NH₂-Gruppe bedeuten)
und entweder eines oder beide der folgenden Tenside: Acetylenglykol der folgenden chemischen Strukturformel [2] 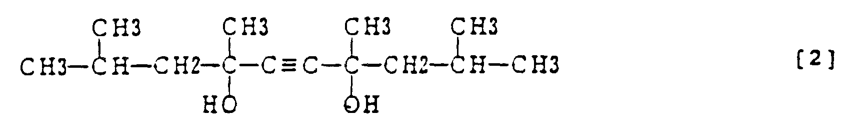
und ein Acetylenglykol-Ethylenoxid-Addukt der folgenden chemischen Strukturformel [3] 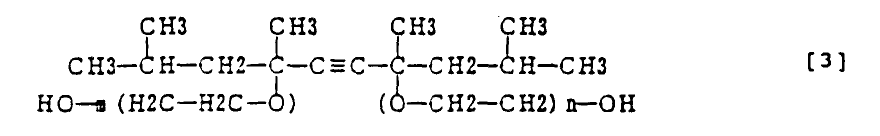
(worin m und n jeweils eine ganze Zahl mit einem Wert von 1 oder mehr bedeuten).

2. Wasserlösliche Tinte nach Anspruch 1, enthaltend 0,1 bis 10,0 Gew.-% des wasserlöslichen Farbstoffs und 0,01 bis 0,1 Gew.-% des Acetylenglykol-Tensids.

3. Wasserlösliche Tinte nach Anspruch 1, enthaltend 0,1 bis 10,0 Gew.-% des wasserlöslichen Farbstoffs und 0,01 bis 0,1 Gew.-% des Acetylenglykol-Ethylenoxid-Addukt-Tensids mit 1 ≤ (m + n) ≤ 5.

4. Wasserlösliche Tinte nach Anspruch 1, enthaltend 0,1 bis 10,0 Gew.-% des wasserlöslichen Farbstoffs und 0,1 bis 10 Gew.-% des Acetylenglykol-Ethylenoxid-Addukt-Tensids mit 6 ≤ (m + n) ≤ 40.

5. Wasserlösliche Tinte nach Anspruch 2, ferner enthaltend 0,01 bis 0,1 Gew.-% des Acetylenglykol-Ethylenoxid-Addukt-Tensids mit 1 ≤ (m + n) ≤ 5.

6. Wasserlösliche Tinte nach Anspruch 2, ferner enthaltend 0,1 bis 10 Gew.-% des Acetylenglykol-Ethylenoxid-Addukt-Tensids mit 6 ≤ (m + n) ≤ 40.

7. Wasserlösliche Tinte nach Anspruch 1 oder 2, enthaltend 0,1 bis 10,0 Gew.-% des wasserlöslichen Farbstoffs, 0,01 bis 0,1 Gew.-% des Acetylenglykol-Ethylenoxid-Addukt-Tensids mit 1 ≤ (m + n ) ≤ 5 und 0,1 bis 10 Gew.-% des Acetylenglykol-Ethylenoxid-Addukt-Tensids mit 6 ≤ (m + n) ≤ 40.

8. Verwendung der wasserlöslichen Tinte nach einem der vorstehenden Ansprüche in einem Tintenstrahldrucker mit einem aus Kunststoff hergestellten Tintenstrahl-Schreibkopf.

9. Schreibkopf für einen Tintenstrahldrucker mit aus Kunststoffmaterial hergestellten Grundplatten, umfassend eine Tintenzufuhröffnung (16), eine gemeinsame Tintenkammer (15) und mindestens einen Satz aus einer Düse (11), einer Druckkammer (13), einem Tintenfließweg (12, 14) zur Verbindung der gemeinsamen Tintenkammer, der Druckkammer und der Düse, wobei der Aufzeichnungskopf durch Verwendung einer wasserlöslichen Tinte nach einem der Ansprüche 1 bis 7 gekennzeichnet ist.

## Revendications

1. Encre soluble dans l'eau comprenant au moins un colorant soluble dans l'eau, un solvant organique soluble dans l'eau et de l'eau (eau désionisée ou eau pure), qui contient au moins un colorant soluble dans l'eau ayant une structure chimique répondant à la formule (1) suivante : 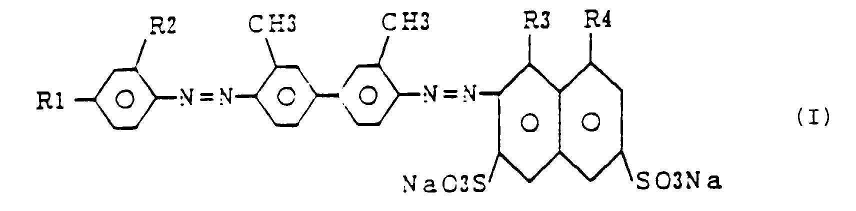 (dans laquelle R1 à R4 représentent chacun un groupe OH ou un groupe NH₂),
et soit l'un soit les deux d'un agent tensio-actif d'acétylène-glycol ayant une structure chimique répondant à la formule (2) suivante : 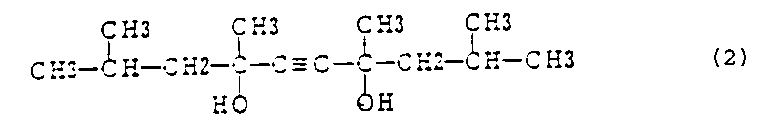
et d'un agent tensio-actif constitué d'un produit d'addition acétylène-glycol/oxyde d'éthylène ayant une structure chimique répondant à la formule (3) suivante : 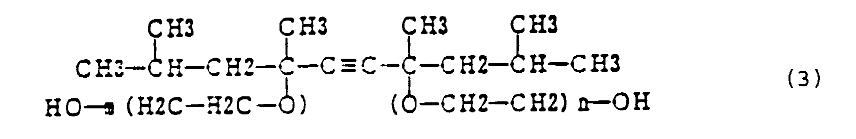
(dans laquelle m et n représentent chacun un entier égal à 1 ou davantage).

2. Encre soluble dans l'eau selon la revendication 1, contenant de 0,1 à 10,0 % en poids de ce colorant soluble dans l'eau et de 0,01 à 0,1 % en poids de cet agent tensio-actif d'acétylène-glycol.

3. Encre soluble dans l'eau selon la revendication 1, contenant de 0,1 à 10,0 % en poids de ce colorant soluble dans l'eau et de 0,01 à 0,1 % en poids de cet agent tensio-actif constitué d'un produit d'addition acétylène-glycol/oxyde d'éthylène dans lequel 1 ≤ (m + n) ≤ 5.

4. Encre soluble dans l'eau selon la revendication 1, contenant de 0,1 à 10,0 % en poids de ce colorant soluble dans l'eau et de 0,1 à 10 % en poids de cet agent tensio-actif constitué d'un produit d'addition acétylène-glycol/oxyde d'éthylène dans lequel 6 ≤ (m + n) ≤ 40.

5. Encre soluble dans l'eau selon la revendication 2, contenant en outre de 0,01 à 0,1 % en poids de cet agent tensio-actif constitué d'un produit d'addition acétylène-glycol/oxyde d'éthylène dans lequel 1 ≤ (m + n) ≤ 5.

6. Encre soluble dans l'eau selon la revendication 2, contenant de 0,1 à 10,0 % en poids de cet agent tensio-actif constitué d'un produit d'addition acétylène-glycol/oxyde d'éthylène dans lequel 6 ≤ (m + n) ≤ 40.

7. Encre soluble dans l'eau selon les revendications 1 ou 2, contenant de 0,1 à 10,0 % en poids de ce colorant soluble dans l'eau, de 0,01 à 0,1 % de cet agent tensio-actif constitué d'un produit d'addition acétylène-glycol/oxyde d'éthylène dans lequel 1 ≤ (m + n) ≤ 5, et de 0,1 à 10,0 % en poids de cet agent tensio-actif constitué d'un produit d'addition acétylène-glycol/oxyde d'éthylène dans lequel 6 ≤ (m + n) ≤ 40.

8. Utilisation d'une encre soluble dans l'eau selon l'une quelconque des revendications précédentes, dans une imprimante à jet d'encre ayant une tête d'enregistrement en matière plastique.

9. Tête d'enregistrement pour une imprimante à jet d'encre composée de plaques de base constituées d'une matière plastique et comprenant un orifice d'alimentation en encre (16), une chambre à encre commune (15) et au moins une série de buses (11), une chambre à pression (13) et une voie d'écoulement de l'encre (12, 13) pour relier cette chambre à encre commune, cette chambre à pression et cette buse, cette tête d'enregistrement étant caractérisée en ce que l'on utilise une encre soluble dans l'eau selon l'une quelconque des revendications 1 à 7.
